(19) Europäisches Patentamt
European Patent Office
Office européen des brevets

(11) **EP 3 815 228 B1**

(12) **EUROPÄISCHE PATENTSCHRIFT**

(45) Veröffentlichungstag und Bekanntmachung des Hinweises auf die Patenterteilung:
**15.02.2023 Patentblatt 2023/07**

(21) Anmeldenummer: **18769059.9**

(22) Anmeldetag: **27.08.2018**

(51) Internationale Patentklassifikation (IPC):
**H02M 1/12** (1968.09)   **H02M 7/483** (2007.01)
**H02M 1/00** (1968.09)

(52) Gemeinsame Patentklassifikation (CPC):
**H02M 1/126; H02M 7/4835;** H02M 1/0012

(86) Internationale Anmeldenummer:
**PCT/EP2018/072960**

(87) Internationale Veröffentlichungsnummer:
**WO 2020/043263 (05.03.2020 Gazette 2020/10)**

(54) **MEHRPHASIGER MEHRSTUFENSTROMRICHTER MIT EINER ANSTEUERUNG UND EINEM PASSIVEN FREQUENZFILTER UND VERFAHREN ZUR ANSTEUERUNG DES MEHRPHASIGEN MEHRSTUFENSTROMRICHTERS**

MULTIPHASE MULTILEVEL POWER CONVERTER HAVING A DRIVE AND A PASSIVE FREQUENCY FILTER, AND METHOD FOR DRIVING THE MULTIPHASE MULTILEVEL POWER CONVERTER

CONVERTISSEUR MULTI-ÉTAGÉ POLYPHASÉ MUNI D'UN DISPOSITIF D'ACTIVATION ET D'UN FILTRE DE FRÉQUENCE PASSIF ET PROCÉDÉ D'ACTIVATION DU CONVERTISSEUR MULTI-ÉTAGÉ POLYPHASÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.05.2021 Patentblatt 2021/18**

(73) Patentinhaber: **Siemens Energy Global GmbH & Co. KG**
**81739 München (DE)**

(72) Erfinder: **PIESCHEL, Martin**
**90518 Altdorf (DE)**

(56) Entgegenhaltungen:
**US-A1- 2009 268 490     US-A1- 2016 380 556**

• **QINGRUI TU ET AL: "Impact of Sampling Frequency on Harmonic Distortion for Modular Multilevel Converter", IEEE TRANSACTIONS ON POWER DELIVERY, IEEE SERVICE CENTER, NEW YORK, NY, US, Bd. 26, Nr. 1, 2011, Seiten 298-306, XP011340622, ISSN: 0885-8977, DOI: 10.1109/TPWRD.2010.2078837**

**Beschreibung**

Die Erfindung betrifft einen mehrphasigen Mehrstufenstromrichter mit einer Ansteuerung und einem passiven Frequenzfilter und ein Verfahren zur Ansteuerung des mehrphasigen Mehrstufenstromrichters gemäß dem Oberbegriff des Anspruchs 1 und des Anspruchs 10.

Mehrphasige Mehrstufenstromrichter sind bekannt und beispielsweise elektrisch mit einem dreiphasigen Wechselspannungs-Energieversorgungsnetz verbunden. QINGRUI TU ET AL: "Impact of Sampling Frequency on Harmonic Distortion for Modular Multilevel Converter" offenbart einen solchen mehrphasigen Mehrstufenstromrichter.

Jeder Mehrstufenstromrichter weist mehrere Phasenmodule auf, die aus mehreren elektrisch in Reihe geschalteten zweipoligen Submodulen bestehen. Die Submodule verfügen über mehrere Halbleiterschalter und einen unipolar aufladbaren Energiespeicher, wobei die vom Aufladungsgrad des Energiespeichers abhängige Energiespeicher-Spannung durch die Halbleiterschalter als Submodul-Spannung zu- und abschaltbar ist, die jeweils zwischen den beiden Submodul-Polen liegt.

Mittels eines Stromsensors wird der durch den Mehrstufenstromrichter und damit durch die Phasenmodule fließende Gesamtstrom und mittels eines Messwandlers wird die Anschlussspannung gemessen. Die gemessenen Strom- und Spannungsmesswerte werden zu einer Ansteuereinheit übertragen, die eine digitale Regelung umfasst, welche mit einer vorgegebenen Abtastfrequenz zu jeweils aufeinanderfolgenden Abtastzeitpunkten die Abweichung der Anschlussspannung von einer vorgegebenen Soll-Spannung erfasst, die in Form von Sollwerten vorgegeben ist, anhand der Sollwerte die Ansteuersignale für die Halbleiterschalter der Submodule berechnet und die Abweichung mittels der Ansteuersignale ausregelt. Die Ansteuersignale schalteten die Submodul-Spannungen entsprechend zu- und ab. D.h. ein Teil der Submodule und damit der Submodul-Spannungen ist jeweils zugeschaltet und ein Teil der Submodule und damit der Submodul-Spannungen ist jeweils nicht zugeschaltet (oder anders gesagt abgeschaltet). Die Summe der zugeschalteten Submodul-Spannungen bildet jeweils die Anschlussspannung, also die Ausgangsspannung des Mehrstufenstromrichters, die sich regelungsbedingt innerhalb eines Abtastintervalls, also innerhalb des Zeitraums zwischen zwei unmittelbar aufeinanderfolgenden Abtastzeitpunkten, nicht wesentlich ändert. Dabei können zugeschaltete Submodul-Spannungen insbesondere auch über mehrere Abtastintervalle zugeschaltet bleiben.

Zur Dämpfung von höherfrequenten Anteilen der Anschlussspannung ist für jedes Phasenmodul ein passives Frequenzfilter vorgesehen, insbesondere als LCL-Passivfilter. Derartige Frequenzfilter weisen eine Resonanzfrequenz auf, die zweckmäßigerweise oberhalb der Abtastfrequenz liegt.

Es ist bekannt, dass passive Frequenzfilter hochfrequente Störungen, die beim Schalten von mehrphasigen Mehrstufenstromrichtern auftreten können, sehr stark dämpfen. Diesem Vorteil steht eine sehr schwach gedämpfte Resonanzstelle gegenüber, welche durch das Schalten der einzelnen Submodule aufgrund von Schaltentscheidungen jedes Mal sprungförmig angeregt wird. Die Schaltentscheidungen werden beispielsweise mittels einer Pulsweitenmodulation oder der aus der WO 2008086760 bekannten Schaltheuristik getroffen. Ist die Resonanzstelle deutlich niederfrequenter als die Schaltfrequenz, kann die Anregung der Resonanzstelle mittels einer Abtastregelung ausreichend bedämpft werden. Die Absenkung der Resonanzstelle bedingt sehr große und damit teure Filterbauelemente. Liegt die Resonanzstelle oberhalb der Abtastfrequenz, so kann es bedingt durch Aliasingeffekte sogar zu einer weiteren Anregung der Resonanzstelle kommen.

Die Aufgabe der Erfindung ist es, einen mehrphasigen Mehrstufenstromrichter mit einem passiven Frequenzfilter nahe der Abtastfrequenz so anzusteuern, dass keine Anregung der Resonanzstelle des Frequenzfilters, insbesondere eines LCL-Passivfilters, erfolgt.

Die Aufgabe wird durch die Merkmale des Anspruchs 1 gelöst; die Unteransprüche stellen vorteilhafte Ausgestaltungen dar.

Die Lösung sieht bezogen auf den Mehrstufenstromrichter vor, dass die Ansteuerung eine Steuerung aufweist, welche innerhalb eines Abtastintervalls der Regelung jeweils zu einer von der Regelung zugeschalteten Submodul-Spannung UDC für eine erste Zeitdauer T1, T2 zumindest eine der abgeschalteten Submodul-Spannungen UDC zumindest einmal (kurzzeitig) zuschaltet und wieder abschaltet.

Insbesondere wird vorgeschlagen, dass die Steuerung zu einer von der Regelung zugeschalteten Submodul-Spannung UDC mehrere der jeweils abgeschalteten Submodul-Spannungen zeitlich beabstandet nacheinander (kurzzeitig) zuschaltet und wieder abschaltet.

Weiter wird vorgeschlagen, dass die Steuerung zu einer von der Regelung zugeschalteten Submodul-Spannung UDC eine der abgeschalteten Submodul-Spannungen UDC zeitlich beabstandet mehrmals (kurzzeitig) zuschaltet und wieder abschaltet.

Zweckmäßigerweise ist die erste Zeitdauer T1 durch T1=1/(2*fr) mit fr gleich der Resonanzfrequenz gegeben.

Mit Vorteil wird vorgeschlagen, dass ein Teil der jeweils abgeschalteten Submodul-Spannungen UDC eine kleinere (mittlere) Submodul-Spannung UDC als die übrigen abgeschalteten Submodul-Spannungen UDC aufweist (mit einer kleineren Submodul-Spannung UDC betrieben wird) und dass die Steuerung nur die kleineren (mittleren) Submodul-Spannungen UDC für die erste Zeitdauer T1 jeweils (kurzzeitig) zuschaltet und wieder abschaltet.

Zweckmäßig ist es dabei, wenn die kleinere Submodul-Spannung UDC halb so groß ist wie die übrigen abgeschalteten Submodul-Spannungen UDC.

Bei vier Halbleiterschaltern je Submodul lässt sich die Dämpfung dadurch weiter verbessern, dass die Steuerung zu einer von der Regelung zugeschalteten Submodul-Spannung UDC gleichzeitig mit dem Zuschalten dieser Submodul-Spannung UDC (durch die Regelung) die kleinere Submodul-Spannung UDC für die erste Zeitdauer T1 (kurzzeitig) invertiert zuschaltet und anschließend wieder abschaltet.

Alternativ ist es von Vorteil, wenn alle Submodule dieselbe (mittlere) Submodul-Spannung UDC aufweisen und die Steuerung jeweils zu einer von der Regelung zugeschalteten Submodul-Spannung eine ungerade Anzahl N-1 für die erste Zeitdauer zuschaltet und wieder abschaltet, danach diese Submodul-Spannungen UDC (dieser Submodule) für eine zweite Zeitdauer mit entgegengesetztem Vorzeichen (invertiert) zuschaltet und wieder abschaltet und nach Ablauf der zweiten Zeitdauer alle von der Steuerung (zusätzlich) zugeschalteten Submodul-Spannungen UDC wieder abschaltet, wobei für die erste und zweite Zeitdauer T1, T2 gelten:

$$T1=1/(2*pi*fr)*arccos((4*(N*UDC)^2-2*(N*UDC)-UDC^2)/(4*(N*UDC)^2))$$

und

$$T2=1/(2*pi*f\_r)*acos((2*(N*UDC)^2-2*(N*UDC)-UDC^2)/(2*(N+1)*UDC^2))$$

Zweckmäßigerweise wird die erste und zweite Zeitdauer T1, T2 abhängig von der Gesamtzahl der Submodule gewählt.

Die Lösung sieht zur Ansteuerung des mehrphasigen Mehrstufenstromrichters vor, dass innerhalb eines Abtastintervalls der Regelung jeweils zu einer von der Regelung zugeschalteten Submodul-Spannung UDC für eine erste Zeitdauer T1, die kleiner als das Abtastintervall ist, zumindest eine der abgeschalteten Submodul-Spannungen UDC zumindest einmal (kurzzeitig) zuschaltet und wieder abschaltet wird.

Die Lösungen bezogen auf den Mehrstufenstromrichter und das Verfahren weisen eine deutlich geringere Anregung des passiven Frequenzfilters und eine wirksamere Dämpfung von Störungen auf. Außerdem ist die Komponentenbelastung insbesondere bei einem LCL-Filter geringer.

Der Kern der Lösungen ist das zeitversetzte Schalten der gestuften Submodul-Spannungen, so dass die Resonanzstelle insbesondere bei einem LCL-Filter kaum angeregt wird.

Hinzu kommt ein besseres Störabstrahlverhalten des Mehrstufenstromrichters. Außerdem ist das Projektrisiko in Bezug auf die EMV-Akzeptanz geringer.

Die Erfindung wird nachfolgend anhand eines Ausführungsbeispiels näher beschrieben. Es zeigen:

Fig. 1    eine Anordnung mit einem modularen Mehrstufenstromrichter,
Fig. 2    einen Mehrstufenstromrichter mit drei Phasenmodulen,
Fig. 3    einen Mehrstufenstromrichter mit sechs Phasenmodulen,
Fig. 4    ein Phasenmodul,
Fig. 5    ein zweipoliges Submodul,
Fig. 6    eine Leistungshalbleiterschaltung mit vier Halbleiterschaltern,
Fig. 7    eine Leistungshalbleiterschaltung mit zwei Halbleiterschaltern,
Fig. 8    einen Energiespeicher in Form eines Kondensatormoduls,
Fig. 9    einen Mehrstufenstromrichter mit drei Phasenmodulen in Sternschaltung,
Fig. 10   ein einphasig an ein Energieversorgungsnetz anschließbares Phasenmodul.
Fig. 11   den zeitlichen Verlauf einer von der Regelung des Mehrstufenstromrichters zugeschalteten Submodul-Spannung und einer von einer Steuerung kurzzeitig zusätzlich zugeschalteten Submodul-Spannung,
Fig. 12   zwei von der Steuerung zusätzlich kurzzeitig zugeschaltete Submodul-Spannungen,
Fig. 13   zwei von der Steuerung zusätzlich kurzzeitig zugeschaltete Submodul-Spannungen mit halbem Spannungswert,
Fig. 14   eine von der Steuerung zusätzlich kurzzeitig zugeschaltete Submodul-Spannung mit invertiertem halben Spannungswert und
Fig. 15   drei zusätzlich kurzzeitig zugeschaltete Submodul-Spannungen.

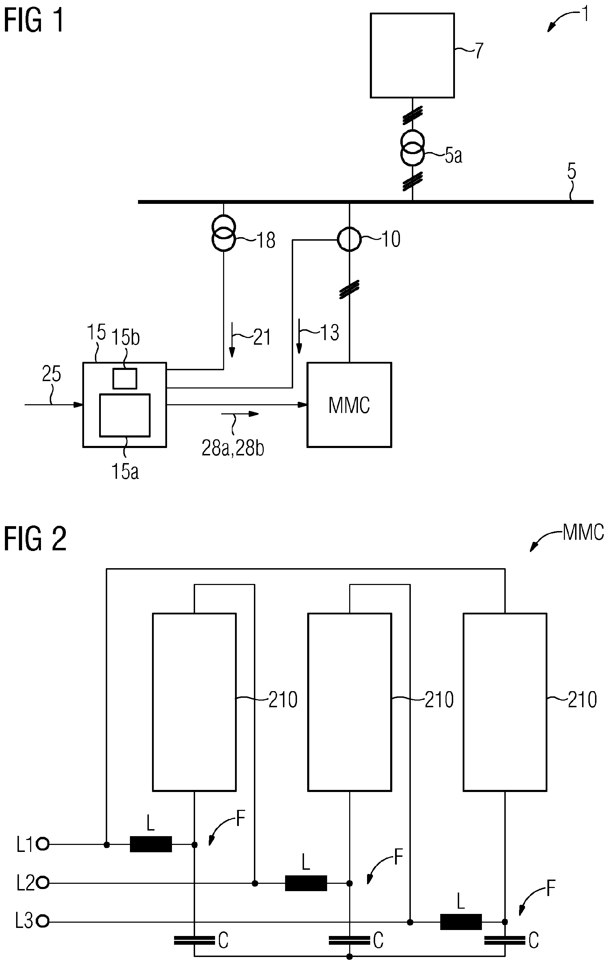

In Fig. 1 ist eine Anordnung 1 mit einem modularen Mehrstufenstromrichter MMC (Modular Multilevel Converter) dargestellt. Der modulare Mehrstufenstromrichter MMC ist dreiphasig über eine Anschlussschiene 5 und einen Transformator 5a mit einem Energieversorgungsnetz 7 elektrisch verbunden. Das Energieversorgungsnetz 7 ist im Ausführungsbeispiel ein dreiphasiges Wechselspannungs-Energieversorgungsnetz. Mittels eines Stromsensors 10 wird der durch den Mehrstufenstromrichter MMC fließende Strom gemessen. Die Strommesswerte 13 werden zu einer Ansteuereinheit 15 für den modularen Mehrstufenstromrichter MMC übertragen. Weiterhin wird mittels eines Spannungssensors 18 (der hier als ein Messwandler ausgeführt ist) die an der Anschlussschiene 5 anliegende Spannung, die Anschlussspannung, gemessen. Diese Spannung entspricht im Wesentlichen der an dem modularen Mehrstufenstromrichter MMC anliegenden Spannung. Die Spannungswerte der Anschlussspannung 21 werden zu der Ansteuereinheit 15 übertragen.

Die Ansteuereinheit 15 umfasst eine digitale Regelung 15a und eine Steuerung 15b.

Anhand von vorgegebenen Sollwerten 25 berechnet die Regelung 15a der Ansteuereinheit 15 Ansteuersignale 28a, die zum modularen Mehrstufenstromrichter MMC übertragen werden. Mittels dieser Ansteuersignale 28a wird der Mehrstufenstromrichter MMC derart angesteuert, dass sich an der Anschlussschiene 5 die gewünschte Anschlussspannung einstellt. Die Regelung 15a der Ansteuereinheit 15 kontrolliert auf diese Weise den Mehrstufenstromrichter MMC.

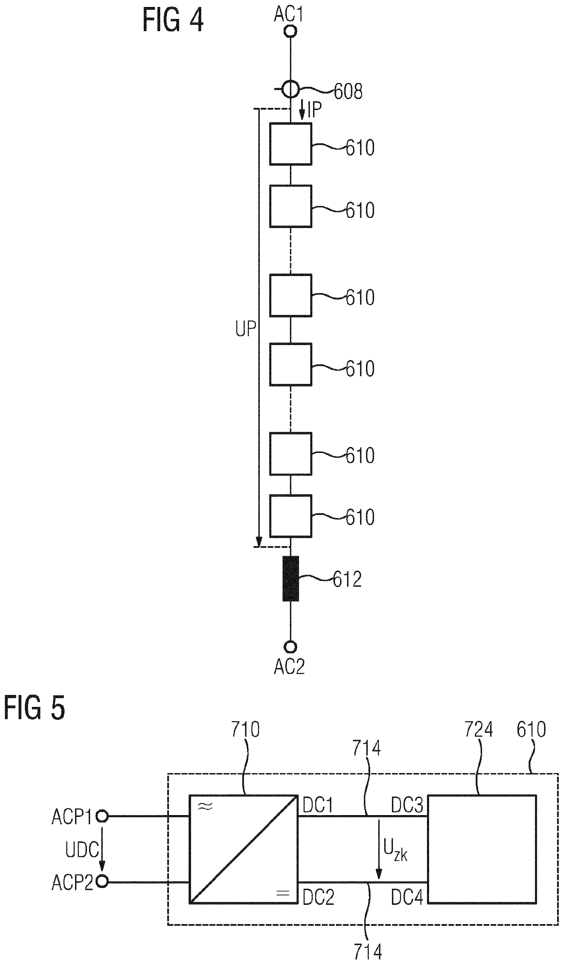

In Fig. 2 ist ein Ausführungsbeispiel eines Mehrstufenstromrichters MMC dargestellt, welcher drei Phasenmodule 210 aufweist. Die drei Phasenmodule 210 sind in Dreiecksschaltung mit Netzdrosseln L und Filterkapazitäten C geschaltet und mit drei Phasen L1, L2 und L3 des Energieversorgungsnetzes 7 verbunden. Der Aufbau der Phasenmodule 210 ist in Fig. 4 gezeigt.

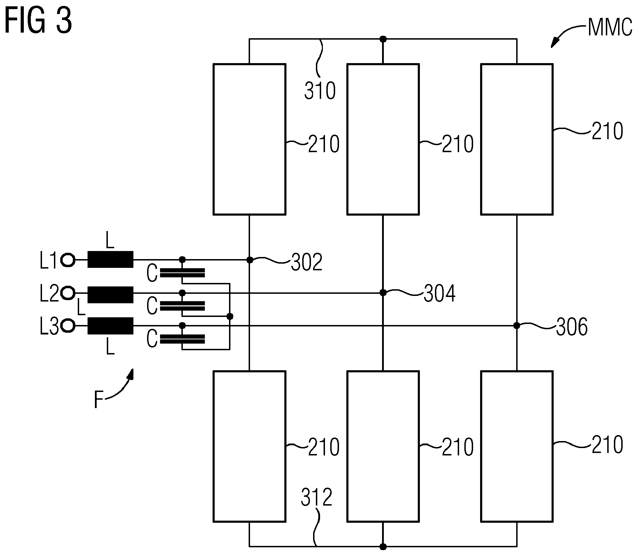

In Fig. 3 ist ein Ausführungsbeispiel eines Mehrstufenstromrichters MMC dargestellt, welcher sechs Phasenmodule 210 aufweist. Die sechs Phasenmodule 210 sind in einer Brückenschaltung (hier: in einer B6-Brückenschaltung) wiederum mit Netzdrosseln L und Filterkapazitäten C angeordnet. Dabei sind jeweils ein Anschluss eines ersten Phasenmoduls und ein Anschluss eines zweiten Phasenmoduls miteinander elektrisch verbunden und bilden einen Wechselspannungsanschluss 302, 304 oder 306.

In Fig. 4 ist ein Ausführungsbeispiel des Phasenmoduls 210 näher dargestellt. Das Phasenmodul 210 weist einen ersten Anschluss AC1 sowie einen zweiten Anschluss AC2 auf. Der erste Anschluss AC1 ist über einen Stromsensor 608 mit einem ersten zweipoligen Submodul 610 elektrisch verbunden. Das erste Submodul 610 ist elektrisch in Reihe geschaltet mit weiteren zweipoligen Submodulen 610; insgesamt weist das Phasenmodul 210 hier beispielhaft 18 Submodule 610 auf. Das letzte der 18 zweipoligen Submodule 610 ist über eine Koppelinduktivität 612 elektrisch mit dem zweiten Anschluss AC2 verbunden. Mittels des Stromsensors 608 wird der durch das Phasenmodul 210 fließende Strom IP gemessen. Der erste Anschluss AC1 und der zweite Anschluss AC2 können jeweils mit einer Phase des Wechselspannungs-Energieversorgungsnetzes 7 verbunden sein.

In Fig. 5 ist ein Ausführungsbeispiel eines zweipoligen Submoduls 610 im Detail dargestellt. Das zweipolige Submodul 610 weist einen ersten Submodulpol ACP1 und einen zweiten Submodulpol ACP2 auf. Die beiden Submodulpole ACP1 und ACP2 sind mit einer Leistungshalbleiterschaltung 710 verbunden (genauer gesagt mit einem Wechselspannungsanschluss der Leistungshalbleiterschaltung 710). Ein Gleichspannungsanschluss der Leistungshalbleiterschaltung 710 ist über einen Gleichspannungszwischenkreis 714 mit einem Energiespeicher 724 verbunden. In dem Gleichspannungszwischenkreis 714 ist die Energiespeicher-Spannung Uzk vorhanden, die als Submodul-Spannung UDC zu- und abschaltbar ist und nach Zuschaltung als zugeschaltete Submodul-Spannung UDC zwischen den beiden Submodul-Polen liegt. Nach Abschaltung Submodul-Spannung UDC liegt keine Spannung (oder eine Nullspannung) zwischen den beiden Submodul-Polen an. Die Leistungshalbleiterschaltung 710 wird auch als "Powermodul" bezeichnet.

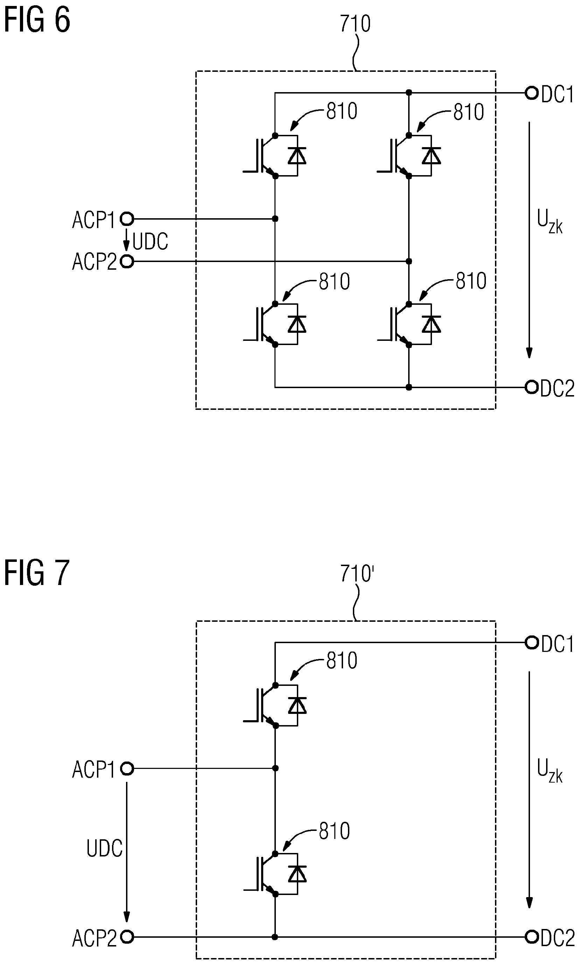

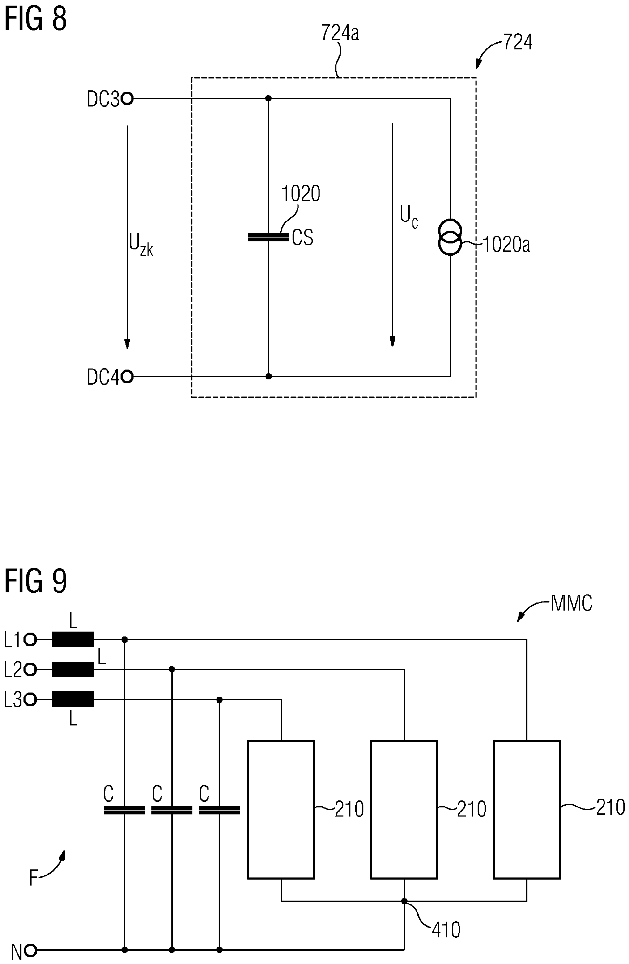

In Fig. 6 ist ein Ausführungsbeispiel der Leistungshalbleiterschaltung 710 dargestellt. Die Leistungshalbleiterschaltung 710 weist vier Halbleiterschalter 810 auf, die ein- und ausschaltbar sind. Jeder der Halbleiterschalter 810 weist ein Leistungshalbleiterbauelement mit einer antiparallel geschalteten Diode auf. Im Ausführungsbeispiel der Fig. 8 ist das Leistungshalbleiterbauelement ein IGBT (Insulated Gate Bipolar Transistor). In anderen Ausführungsbeispielen kann das Halbleiterbauelement jedoch auch anders ausgestaltet sein, zum Beispiel als IGCT (Integrated Gate-Commutated Thyristor), IEGT (Injection-Enhanced Gate Transistor) oder als MOSFET (Metal-Oxide-Semiconductor Field-Effect Transistor). Die vier Halbleiterschalter 810 bilden im Ausführungsbeispiel der Fig. 8 eine Vollbrückenschaltung. Dadurch kann die Polarität der zwischen den Submodulpolen ACP1 und ACP2 anliegenden Submodul-Spannung UDC umgekehrt werden.

In Fig. 7 ist ein weitere Ausführungsbeispiel einer Leistungshalbleiterschaltung 710' dargestellt, welche lediglich zwei Leistungshalbleiterschalter 810 aufweist und auch nur für einen Mehrstufenstromrichter MMC gemäß Fig. 3 geeignet ist. Die beiden Leistungshalbleiterschalter 810 bilden im Ausführungsbeispiel der Fig. 9 eine Halbbrückenschaltung. Dadurch kann zwischen den Submodulpolen ACP1 und ACP2 nur eine Submodul-Spannung UDC einer Polarität (und eine Nullspannung) ausgegeben werden.

In Fig. 8 ist der Energiespeicher 724 in Form eines Kondensatormoduls 724a dargestellt, das hier aus einem Kondensator C als Energiespeicher 1020 und einer parallelgeschalteten Spannungsmesseinrichtung 1020a besteht, wobei am Kondensator C die Energiespeicher-Spannung Uzk als Kondensatorspannung UC anliegt und von diesem gepuffert wird.

Fig. 9 zeigt ein Ausführungsbeispiel eines modularen Mehrstufenstromrichters MMC, bei dem drei Phasenmodule 210 in Sternschaltung mit Netzdrosseln L und Filterkapazitäten C geschaltet sind. Dabei sind Anschlüsse der drei Phasenmodule 210 miteinander elektrisch verbunden und bilden einen Sternpunkt 410. Der Sternpunkt 410 ist mit einem Rückleiter N des Energieversorgungsnetzes 7 verbunden. Die jeweils drei anderen Anschlüsse der Phasenmodule 210 sind jeweils mit einer Phase L1, L2 oder L3 des Energieversorgungsnetzes 7 verbunden.

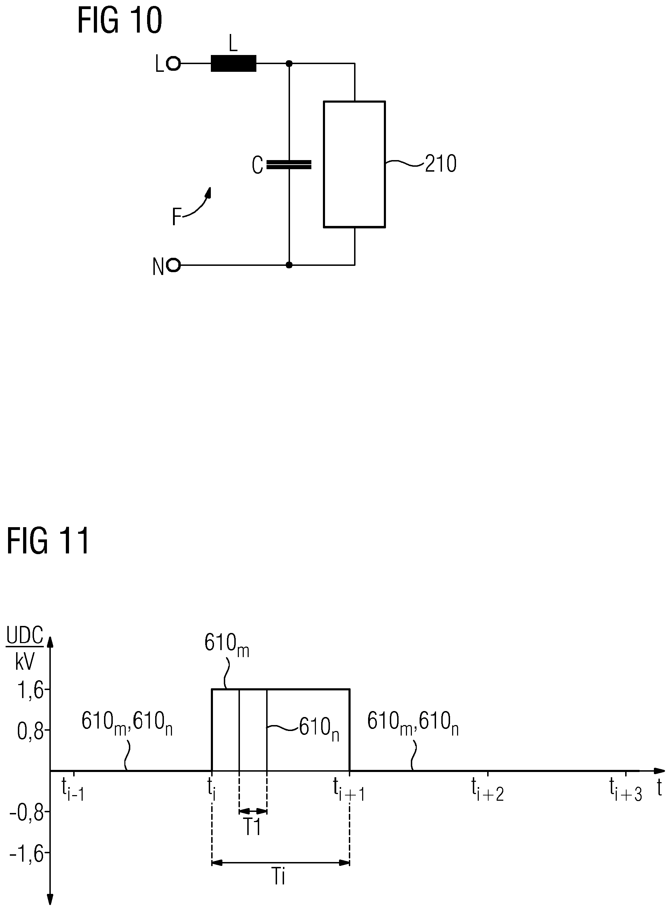

In Fig. 10 ist noch ein einzelnes Phasenmodul 210 dargestellt, welches einphasig an ein Energieversorgungsnetz angeschlossen werden kann. Dabei kann dieses Phasenmodul 210 zwischen einer Phase L und dem Rückleiter N des Energieversorgungsnetzes angeschlossen werden, wie in Fig. 10 dargestellt ist.

Der mehrphasige Mehrstufenstromrichter MMC weist also Phasenmodule 210 auf, die jeweils aus mehreren elektrisch in Reihe geschalteten zweipoligen Submodulen 610 gebildet sind. Jedes Submodul 610 verfügt jeweils über mehrere Halbleiterschalter 810 und einen unipolar aufladbaren Kondensator C als Energiespeicher 1020, wobei die vom Aufladungsgrad des Energiespeichers 1020 abhängige Energiespeicher-Spannung Uzk durch die Halbleiterschalter 810 bei entsprechendem Schaltzustand der Halbleiterschalter 810 als Submodul-Spannung UDC zwischen den beiden Submodul-Polen ACP1, ACP2 zu- und abschaltbar ist. Dabei bildet die Summe der zugeschalteten Submodul-Spannungen UDC jeweils die Anschlussspannung 21 mit einer vorgegebenen Grundfrequenz. Zur Dämpfung von gegenüber der Grundfrequenz höherfrequenten Anteilen der Anschlussspannung 21 ist je Phasenmodul 210 ein passives Frequenzfilter F vorgesehen. Ein Teil der Submodule 610 weist dabei jeweils zugeschaltete Submodul-Spannungen UDC und ein Teil der Submodule 610 abgeschaltete (also nicht zugeschaltete) Submodul-Spannungen UDC auf. Die Ansteuerung (Ansteuereinheit 15) verfügt eine digitale Regelung 15b, welche die Abweichung der Anschlussspannung (Spannungssensors 18) von einer vorgegebenen Soll-Spannung ausregelt, indem sie mit einer vorgegebenen Abtastfrequenz (1/Ti) zu jeweils aufeinanderfolgenden Abtastzeitpunkten ti abgeschaltete Submodul-Spannungen UDC zuschaltet und zugeschaltete Submodul-Spannungen UDC abschaltet (und insbesondere zugeschaltete Submodul-Spannungen UDC zugeschaltet lässt). Die Resonanzfrequenz fr des Frequenzfilters F liegt oberhalb der Abtastfrequenz (1/Ti). Zusätzlich zur Regelung 15a gehört die Steuerung 15b zur Ansteuerung (Ansteuereinheit 15).

Fig. 11 zeigt beispielhaft den zeitlichen Verlauf der Submodul-Spannungen UDC von mehreren Submodulen 610, insbesondere eine zum Zeitpinkt ti von der Regelung 15a zugeschaltete Submodul-Spannung UDC eines Submoduls 610m. Die Steuerung 15b schaltet dann innerhalb des Abtastintervalls Ti der Regelung 15a zu der von der Regelung 15a zugeschalteten Submodul-Spannung UDC des Submoduls 610m die Submodul-Spannung UDC eines der unmittelbar davor abgeschalteten Submodule, hier des Submoduls 610n, für eine erste Zeitdauer T1 einmal kurzzeitig (zeitlich kürzer als das Abtastintervall Ti) zu und wieder ab.

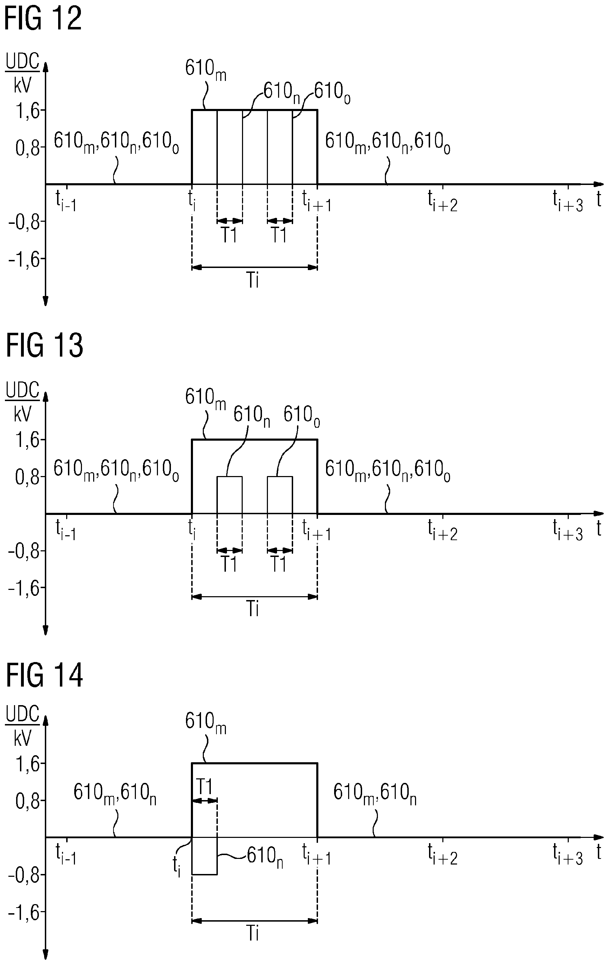

Fig. 12 zeigt wie Fig. 11 den zeitlichen Verlauf der zum Zeitpinkt ti von der Regelung 15a zugeschaltete Submodul-Spannung UDC des Submoduls 610m. Die Steuerung 15b schaltet dann aber zwei der unmittelbar davor abgeschalteten Submodul-Spannungen UDC, hier die der Submodule 610n, 610o, zeitlich beabstandet nacheinander kurzzeitig (für eine Zeitdauer T1) zu und wieder ab.

Dabei ist es auch möglich, dass die Steuerung 15b zu der von der Regelung 15a zugeschalteten Submodul-Spannung UDC des Submoduls 610m eine der abgeschalteten Submodul-Spannungen UDC (hier die des Submoduls 610n oder des Submoduls 610o) innerhalb eines Abtastintervalls Ti zeitlich beabstandet mehrmals kurzzeitig zuschaltet und wieder abschaltet.

Die erste Zeitdauer T1 ist durch T1=1/(2*fr) mit fr gleich der Resonanzfrequenz gegeben.

Fig. 13 zeigt beispielhaft, dass ein Teil der jeweils unmittelbar vor dem Zeitpunkt ti abgeschalteten Submodul-Spannungen UDC (zu denen hier die beiden Submodul-Spannungen UDC der Submodule 610n, 610o gehören) eine kleinere Submodul-Spannung UDC als die übrigen abgeschalteten Submodul-Spannungen UDC aufweist, also mit einer kleineren Submodul-Spannung UDC betrieben wird, und dass die Steuerung 15 nur die kleineren Submodul-Spannungen UDC (hier die der Submodule 610n, 610o) für eine erste Zeitdauer T1 jeweils nacheinander (kurzzeitig) zuschaltet und wieder abschaltet. Beispielsweise kann die kleinere Submodul-Spannung UDC halb so groß sein wie die übrigen abgeschalteten Submodul-Spannungen UDC, wie in Fig. 13 beispielhaft dargestellt.

Fig. 14 zeigt wieder beispielhaft den zeitlichen Verlauf der zum Zeitpinkt ti von der Regelung 15a zugeschalteten Submodul-Spannung UDC des Submoduls 610m. Die Steuerung 15b schaltet dann zu der von der Regelung 15a zugeschalteten Submodul-Spannung UDC des Submoduls 610m gleichzeitig mit dem Zuschalten dieser Submodul-Spannung UDC die kleinere Submodul-Spannung UDC des Submoduls 610n für die erste Zeitdauer T1 (kurzzeitig) invertiert zu und anschließend wieder ab. Eine Invertierung der Submodul-Spannung UDC setzt schaltungstechnisch voraus, dass vier Halbleiterschaltern 810 je Submodul 610 vorhanden sind.

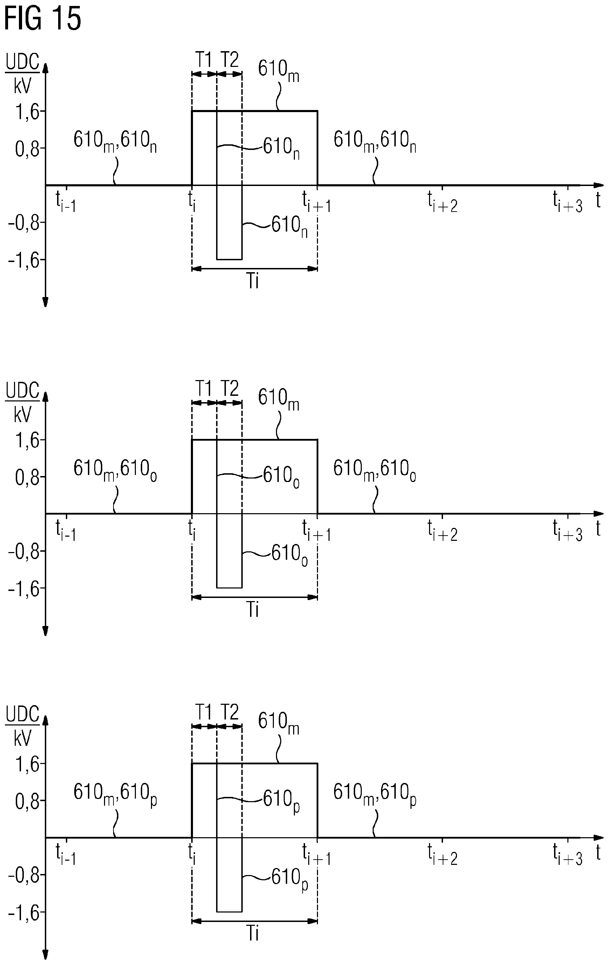

Fig. 15 zeigt: Für den Fall, dass alle Submodule 610 dieselbe (mittlere) Submodul-Spannung UDC aufweisen, kann die Steuerung 15a jeweils zu einer von der Regelung 15a zugeschalteten Submodul-Spannung UDC des Submoduls 610m eine ungerade Anzahl N-1 (hier z.B. drei) Submodul-Spannungen UDC (hier der Submodule 610n, 610o, 610p) für die erste Zeitdauer T1 zu- und wieder abschalten, danach diese Submodul-Spannungen UDC (hier der Submodule 610n, 610o, 610p) für eine zweite Zeitdauer T2 mit entgegengesetztem Vorzeichen (also invertiert) zuschalten und wieder abschalten und nach Ablauf der zweiten Zeitdauer T2 alle von der Steuerung 15b (zusätzlich) zugeschalteten Submodul-Spannungen UDC (hier der Submodule 610n, 610o, 610p) wieder abschalten. Für die erste und zweite Zeitdauer T1, T2 muss dann gelten (mit ^2 entspricht hoch 2 entspricht also zum Quadrat):

```
T1=1/(2*pi*fr)*arccos((4*(N*UDC)^2-2*(N*UDC)-
UDC^2)/(4*(N*UDC)^2))
```

und

```
T2=1/(2*pi*fr)*acos((2*(N*UDC)^2-2*( N*UDC)-
UDC^2)/(2*(N+1)*UDC^2)).
```

Die erste und zweite Zeitdauer T1, T2 ist dabei abhängig von dieser Anzahl N-1 im Verhältnis zu der Gesamtzahl M der Submodule 610 zu wählen.

Wie in Fig. 11 - Fig. 15 quasi dargestellt, wird verfahrensmäßig innerhalb eines Abtastintervalls Ti der Regelung 15a jeweils zu einer von der Regelung 15a zugeschalteten Submodul-Spannung UDC (in Fig. 11 - Fig. 15 das Submodul 610m) für eine Zeitdauer T1, T2, die kleiner als das Abtastintervall Ti ist, zumindest eine der abgeschalteten Submodul-Spannungen UDC (in Fig. 11 - Fig. 15 des Submoduls 610n oder der Submodule 610n und 610o oder der Submodule 610n und 610o und 610p) zumindest einmal (kurzzeitig) zuschaltet und wieder abschaltet.

Bei den Submodul-Spannungen UDC handelt es sich jeweils um mittlere Submodul-Spannungen UDC.

**Patentansprüche**

1. Mehrphasiger Mehrstufenstromrichter (MMC) mit einem Phasenmodul (210), das aus mehreren elektrisch in Reihe geschalteten zweipoligen Submodulen (610) gebildet ist, die jeweils mehrere Halbleiterschalter (810) und einen unipolar aufladbaren Energiespeicher (1020) aufweisen, wobei die Energiespeicher-Spannung (Uzk) durch die Halbleiterschalter (810) als Submodul-Spannung (UDC) zwischen den beiden Submodul-Polen (ACP1, ACP2) zu- und abschaltbar ist, wobei die Summe der zugeschalteten Submodul-Spannungen (UDC) jeweils die Anschlussspannung (21) mit einer vorgegebenen Grundfrequenz bildet, wobei zur Dämpfung von gegenüber der Grundfrequenz höherfrequenten Anteilen der Anschlussspannung (21) je Phasenmodul (210) ein passives Frequenzfilter (F) vorgesehen ist, wobei in Gebrauch jeweils ein Teil der Submodule (610) zugeschaltete Submodul-Spannungen (UDC) und ein Teil der Submodule (610) abgeschaltete Submodul-Spannungen (UDC) aufweisen, mit einer Ansteuerung (15), die eine digitale Regelung (15a)

   aufweist, die eingerichtet ist, die Abweichung der Anschlussspannung (21) von einer vorgegebenen Soll-Spannung auszuregeln, indem sie entsprechend einer vorgegebenen Abtastfrequenz (ft) zu jeweils aufeinanderfolgenden Abtastzeitpunkten (ti) abgeschaltete Submodul-Spannungen (UDC) zuschaltet und zugeschaltete Submodul-Spannungen (UDC) abschaltet, und wobei das Frequenzfilter (F) eine Resonanzfrequenz (fr) aufweist, die oberhalb der Abtastfrequenz (ft) liegt, **dadurch gekennzeichnet, dass** die Ansteuerung (15) eine Steuerung (15b) aufweist,
   die eingerichtet ist, innerhalb eines Abtastintervalls (Ti) der Regelung (15a) jeweils zu einer von der Regelung (15a) zugeschalteten Submodul-Spannung (UDC) für eine erste Zeitdauer (T1) zumindest eine der abgeschalteten Submodul-Spannungen (UDC) zumindest einmal zuzuschalten und wieder abzuschalten, wodurch die Anregung des Frequenzfilters verringert ist.

2. Mehrstufenstromrichter nach Anspruch 1,
   **dadurch gekennzeichnet,**
   **dass** die Steuerung (15b) eingerichtet ist, zu einer von der Regelung (15a) zugeschalteten Submodul-Spannung (UDC) mehrere der jeweils abgeschalteten Submodul-Spannungen (UDC) zeitlich beabstandet nacheinander zuzuschalten und wieder abzuschalten.

3. Mehrstufenstromrichter nach Anspruch 1,
   **dadurch gekennzeichnet,**
   **dass** die Steuerung (15b) eingerichtet ist, zu einer von der Regelung (15a) zugeschalteten Submodul-Spannung (UDC) eine der abgeschalteten Submodul-Spannungen (UDC) zeitlich beabstandet mehrmals zuzuschalten und wieder abzuschalten .

4. Mehrstufenstromrichter nach einem der Ansprüche 1 - 3,
**dadurch gekennzeichnet,**
**dass** die erste Zeitdauer T1 durch T1=1/(2*fr) mit fr gleich der Resonanzfrequenz gegeben ist.

5. Mehrstufenstromrichter nach einem der Ansprüche 1 - 4,
**dadurch gekennzeichnet,**
**dass** ein Teil der jeweils abgeschalteten Submodul-Spannungen (UDC) eine kleinere Submodul-Spannung (UDC) als die übrigen abgeschalteten Submodul-Spannungen (UDC) aufweist und dass die Steuerung eingerichtet ist, nur die kleineren (mittleren) Submodul-Spannungen (UDC) für die erste Zeitdauer T1 jeweils zuzuschalten und wieder abzuschalten .

6. Mehrstufenstromrichter nach Anspruch 5,
**dadurch gekennzeichnet,**
**dass** die kleinere Submodul-Spannung (UDC) halb so groß ist wie die übrigen abgeschalteten Submodul-Spannungen (UDC).

7. Mehrstufenstromrichter nach einem der Ansprüche 1 - 6,
**dadurch gekennzeichnet,**
**dass** die Steuerung (15b) eingerichtet ist, zu einer von der Regelung (15a) zugeschalteten Submodul-Spannung (UDC) gleichzeitig mit dem Zuschalten dieser Submodul-Spannung (UDC) die kleinere Submodul-Spannung (UDC) für die erste Zeitdauer (T1) invertiert zuzuschalten und anschließend wieder abzuschalten.

8. Mehrstufenstromrichter nach Anspruch 1,
**dadurch gekennzeichnet,**
**dass** in Gebrauch

alle Submodule (610) dieselbe Submodul-Spannung (UDC) aufweisen und die Steuerung (15b) eingerichtet ist, jeweils zu einer von der Regelung (15a) zugeschalteten Submodul-Spannung (UDC) eine ungerade Anzahl für die erste Zeitdauer (T1) zuzuschalten und
wieder abzuschalten, danach diese Submodul-Spannungen (UDC) für eine zweite Zeitdauer (T2) mit entgegengesetztem Vorzeichen zuzuschalten und nach Ablauf der zweiten Zeitdauer (T2) alle von der Steuerung (15b) zugeschalteten Submodul-Spannungen (UDC) wieder abzuschalten,
wobei für die erste und zweite Zeitdauer (T1, T2) gilt:

$$T1=1/(2*pi*fr)*arccos((4*(N*UDC)^2-2*(N*UDC)-UDC^2)/(4*(N*UDC)^2))$$

und

$$T2=1/(2*pi*f\_r)*acos((2*(N*UDC)^2-2*(N*UDC)-UDC^2)/(2*(N+1)*UDC^2)).$$

9. Mehrstufenstromrichter nach Anspruch 8,
**dadurch gekennzeichnet,**
**dass** die erste und zweite Zeitdauer (T1, T2) abhängig von der Anzahl im Verhältnis zu der Gesamtzahl der Submodule (610) ist.

10. Verfahren zur Ansteuerung eines mehrphasigen Mehrstufenstromrichters (MMC), der ein Phasenmodul (210) aufweist, das aus mehreren elektrisch in Reihe geschalteten zweipoligen Submodulen (610) gebildet ist, die jeweils mehrere Halbleiterschalter (810) und einen unipolar aufladbaren Energiespeicher (1020) aufweisen, wobei die Energiespeicher-Spannung (Uzk) durch die Halbleiterschalter (810) als Submodul-Spannung (UDC) zwischen den beiden Submodul-Polen (ACP1, ACP2) zu- und abschaltbar ist,

wobei die Summe der zugeschalteten Submodul-Spannungen (UDC) jeweils die Anschlussspannung (21) mit einer vorgegebenen Grundfrequenz bildet,
wobei zur Dämpfung von gegenüber der Grundfrequenz höherfrequenten Anteilen der Anschlussspannung (21) je Phasenmodul (210) ein passives Frequenzfilter (F) vorgesehen ist,
wobei jeweils ein Teil der Submodule zugeschaltete Submodul-Spannungen (UDC) und ein Teil der Submodule (610) abgeschaltete Submodul-Spannungen (UDC) aufweisen,
wobei das Frequenzfilter (F) eine Resonanzfrequenz (fr) aufweist, die oberhalb einer vorgegebenen Abtastfrequenz (ft) liegt,
bei dem durch eine digitale Regelung (15a) zu jeweils aufeinanderfolgenden Abtastzeitpunkten (tft) die Abweichungen der Anschlussspannung (21) von einer vorgegebenen Soll-Spannung erfasst werden und zumindest eine abgeschalteten Submodul-Spannungen (UDC) zugeschaltet oder zumindest eine der zugeschalteten Submodul-Spannungen (UDC) abschaltet wird,
**dadurch gekennzeichnet,**
**dass** innerhalb eines Abtastintervalls (Ti) der Regelung (15a) jeweils zu einer von der Regelung (15a) zugeschalteten Submodul-Spannung (UDC) für eine erste Zeitdauer (T1, T2), die kleiner als das Abtastintervall (Ti) ist, zumindest eine der abgeschalteten Submodul-Spannungen (UDC) zumindest einmal zugeschaltet und wieder abgeschaltet wird, wodurch die Anregung des Frequenzfilters verringert wird.

## Claims

1. Multiphase multilevel power converter (MMC) comprising a phase module (210) that is formed from a plurality of two-pole submodules (610) electrically connected in series, which each have a plurality of semiconductor switches (810) and an energy store (1020) that is chargeable in a unipolar manner, wherein the energy store voltage (Uzk) is able to be switched on and off as a submodule voltage (UDC) between the two submodule poles (ACP1, ACP2) by the semiconductor switches (810),

   wherein the sum of the switched-on submodule voltages (UDC) in each case forms the connection voltage (21) having a predefined fundamental frequency,
   wherein, in order to damp components of the connection voltage (21) that are at higher frequency than the fundamental frequency, a passive frequency filter (F) is provided for each phase module (210),
   wherein, during use, in each case a portion of the submodules (610) has switched-on submodule voltages (UDC) and a portion of the submodules (610) has switched-off submodule voltages (UDC), comprising a drive (15) having a digital regulator (15a), which is configured to correct the deviation of the connection voltage (21) from a predefined target voltage by virtue of the fact that it switches on switched-off submodule voltages (UDC) and switches off switched-on submodule voltages (UDC) at respectively successive sampling instants (ti) in accordance with a predefined sampling frequency (ft), and
   wherein the frequency filter (F) has a resonant frequency (fr) that is above the sampling frequency (ft),
   **characterized**
   **in that** the drive (15) has a controller (15b), which is configured, within a sampling interval (Ti) of the regulator (15a), in each case with respect to a submodule voltage (UDC) switched on by the regulator (15a), to switch on and switch off again at least one of the switched-off submodule voltages (UDC) at least once for a first time duration (T1), as a result of which the excitation of the frequency filter is reduced.

2. Multilevel power converter according to Claim 1,
   **characterized**
   **in that**, with respect to a submodule voltage (UDC) switched on by the regulator (15a), the controller (15b) is configured to switch on and switch off again a plurality of the respectively switched-off submodule voltages (UDC) successively in a temporally spaced-apart manner.

3. Multilevel power converter according to Claim 1,
   **characterized**
   **in that**, with respect to a submodule voltage (UDC) switched on by the regulator (15a), the controller (15b) is configured to switch on and switch off again one of the switched-off submodule voltages (UDC) repeatedly in a temporally spaced-apart manner.

4. Multilevel power converter according to one of Claims 1 - 3,
   **characterized**
   **in that** the first time duration T1 is given by T1=1/(2*fr), where fr equals the resonant frequency.

5. Multilevel power converter according to one of Claims 1 - 4,

**characterized**

**in that** a portion of the respectively switched-off submodule voltages (UDC) has a smaller submodule voltage (UDC) than the other switched-off submodule voltages (UDC), and in that the controller is configured to switch on and switch off again in each case only the smaller (average) submodule voltages (UDC) for the first time duration T1.

6. Multilevel power converter according to Claim 5,
   **characterized**
   **in that** the magnitude of the smaller submodule voltage (UDC) is half that of the other switched-off submodule voltages (UDC).

7. Multilevel power converter according to one of Claims 1 - 6,
   **characterized**
   **in that**, with respect to a submodule voltage (UDC) switched on by the regulator (15a), simultaneously with the switching on of this submodule voltage (UDC), the controller (15b) is configured to switch on and subsequently switch off again the smaller submodule voltage (UDC) in an inverted manner for the first time duration (T1).

8. Multilevel power converter according to Claim 1,
   **characterized**
   **in that**, during use, all submodules (610) have the same submodule voltage (UDC) and, in each case with respect to a submodule voltage (UDC) switched on by the regulator (15a), the controller (15b) is configured to switch on and switch off again an odd number for the first time duration (T1), then to switch on these submodule voltages (UDC) with an opposite sign for a second time duration (T2) and, after the second time duration (T2) has elapsed, to switch off again all submodule voltages (UDC) switched on by the controller (15b), wherein the following holds true for the first and second time durations (T1, T2) :

$$T1=1/(2*pi*fr)*arccos((4*(N*UDC)^2-2*(N*UDC)-UDC^2)/(4*(N*UDC)^2))$$

and

$$T2=1/(2*pi*f\_r)*acos((2*(N*UDC)^2-2*(N*UDC)-UDC^2)/(2*(N+1)*UDC^2)).$$

9. Multilevel power converter according to Claim 8,
   **characterized**
   **in that** the first and second time durations (T1, T2) are dependent on the number in relation to the total number of submodules (610).

10. Method for driving a multiphase multilevel power converter (MMC) having a phase module (210) that is formed from a plurality of two-pole submodules (610) electrically connected in series, which each have a plurality of semiconductor switches (810) and an energy store (1020) that is chargeable in a unipolar manner, wherein the energy store voltage (Uzk) is able to be switched on and off as a submodule voltage (UDC) between the two submodule poles (ACP1, ACP2) by the semiconductor switches (810),

    wherein the sum of the switched-on submodule voltages (UDC) in each case forms the connection voltage (21) having a predefined fundamental frequency,
    wherein, in order to damp components of the connection voltage (21) that are at higher frequency than the fundamental frequency, a passive frequency filter (F) is provided for each phase module (210),
    wherein in each case a portion of the submodules has switched-on submodule voltages (UDC) and a portion of the submodules (610) has switched-off submodule voltages (UDC),
    wherein the frequency filter (F) has a resonant frequency (fr) that is above a predefined sampling frequency (ft), in which, by means of a digital regulator (15a), at respectively successive sampling instants (tft), the deviations of the connection voltage (21) from a predefined target voltage are detected and at least one of the switched-off submodule voltages (UDC) is switched on or at least one of the switched-on submodule voltages (UDC) is switched off,
    **characterized**

**in that**, within a sampling interval (Ti) of the regulator (15a), in each case with respect to a submodule voltage (UDC) switched on by the regulator (15a), at least one of the switched-off submodule voltages (UDC) is switched on and switched off again at least once for a first time duration (T1, T2) that is less than the sampling interval (Ti), as a result of which the excitation of the frequency filter is reduced.

**Revendications**

1. Convertisseur (MMC) polyphasé à plusieurs étages comprenant une module (210) de phase, qui est formé de plusieurs sous-modules (610) bipolaires montés électriquement en série, qui ont chacun plusieurs interrupteurs (810) à semiconducteur et un accumulateur (1020) d'énergie pouvant être chargé unipolairement, dans lequel la tension (Uzk) de l'accumulateur d'énergie peut, comme tension (UDC) de sous-module entre les deux pôles (ACP1, ACP2) de sous-module, être appliquée et coupée par les interrupteurs (810) à semiconducteur,

    dans lequel la somme des tensions (UDC) de sous-module appliquée forme respectivement la tension (21) d'alimentation ayant une fréquence fondamentale donnée à l'avance,
    dans lequel, pour l'amortissement de proportions de fréquence plus hautes que la fréquence fondamentale de la tension (21) d'alimentation, il est prévu, pour chaque module (210) de phase, un filtre (F) de fréquence passif,
    dans lequel, en utilisation, respectivement une partie des sous-modules (610) ont des tensions (UDC) de sous-module appliquées et, une partie des sous-modules (610), des tensions (UDC) de sous-module coupées,
    comprenant une commande (15), qui a une régulation (15a) numérique et qui est conçue pour réguler l'écart de la tension (21) d'alimentation à une tension de consigne donnée à l'avance par le fait que, conformément à une fréquence (ft) d'échantillonnage donnée à l'avance à des instants (ti) d'échantillonnage successifs, elle applique des tensions (UDC) de sous-module coupées et elle coupe des tensions (UDC) de sous-module appliquées, et
    dans lequel la fréquence (F) du filtre a une fréquence (fr) de résonnance, qui est supérieure à la fréquence (ft) d'échantillonnage,
    **caractérisé en ce que**
    la commande (15) a une commande (15b), qui est conçue pour, à l'intérieur d'un intervalle (Ti) d'échantillonnage de la régulation (15a), appliquer au moins une fois, à une tension (UDC) de sous-module appliquée par la régulation (15a), pendant une première durée (T1), au moins l'une des tensions (UDC) de sous-module coupées et pour la recouper, grâce à quoi l'excitation du filtre de fréquence est diminuée.

2. Convertisseur à plusieurs étages suivant la revendication 1,
    **caractérisé en ce que**
    la commande (15b) est conçue pour appliquer successivement à distance dans le temps à une tension (UDC) de sous-module appliquée par la régulation (15a) plusieurs des tensions (UDC) de sous-modules respectivement coupées et pour la recouper.

3. Convertisseur à plusieurs étages suivant la revendication 1,
    **caractérisé en ce que**
    la commande (15b) est conçue pour appliquer plusieurs fois à distance dans le temps à une tension (UDC) de sous-module appliquée par la régulation (15a) l'une des tensions (UDC) de sous-module coupées et pour la recouper.

4. Convertisseur à plusieurs étages suivant l'une des revendications 1 à 3,
    **caractérisé en ce que**
    la première durée T1 est donnée par T1= 1 /(2*fr), fr étant égale à la fréquence de résonnance.

5. Convertisseur à plusieurs étages suivant l'une des revendications 1 à 4,
    **caractérisé en ce qu'**
    une partie des tensions (UDC) de sous-module coupées respectivement a une tension (UDC) de sous-module plus basse que les autres tensions (UDC) de sous-module coupées et **en ce que** la commande est conçue pour respectivement appliquer, pendant la première durée T1, seulement les tensions (UDC) de sous-module plus basses (moyennes) et pour les recouper.

6. Convertisseur à plusieurs étages suivant la revendication 5,
    **caractérisé en ce que**
    la tension (UDC) de sous-module plus basse est égale à la moitié des autres tensions (UDC) de sous-module coupées.

7. Convertisseur à plusieurs étages suivant l'une des revendications 1 à 6,
**caractérisé en ce que**
la commande (15b) est conçue pour appliquer de manière inversée pendant la première durée (T1) à une tension (UDC) de sous-module appliquée par la régulation (15a) en même temps que l'application de cette tension (UDC) de sous-module, la tension (UDC) la plus basse et ensuite pour la recouper.

8. Convertisseur à plusieurs étages suivant la revendication 1,
**caractérisé en ce qu'**
en utilisation tous les sous-modules (610) ont la même tension (UDC) de sous-module et la commande (15b) est conçue pour appliquer une tension (UDC) de sous-module appliquée par la régulation (15a), un nombre impair pendant la première durée (T1) et la recouper ensuite pour appliquer ces tensions (UDC) de sous-module pendant une deuxième durée (T2) avec un signe opposé et, après l'expiration de la deuxième durée (T2), pour recouper toutes les tensions (UDC) de sous-module appliquées par la commande (15b), dans lequel, pour la première et la deuxième durées (T1, T2) on a :

$$T1=1/(2*pi*fr)*arccos((4*(N*UDC)^2-2*(N*UDC)-UDC^2)/$$
$$(4*(N*UDC)^2))$$

et

$$T2=1/(2*pi*f\_r)*acos((2*(N*UDC)^2-2*(N*UDC)-UDC^2)/$$
$$(2*(N+1)*UDC^2)).$$

9. Convertisseur à plusieurs étages suivant la revendication 8,
**caractérisé en ce que**
la première et la deuxième durées (T1, T2) dépendent du nombre par rapport au nombre total des sous-modules (610).

10. Procédé de commande d'un convertisseur (MMC) polyphasé à plusieurs étages, qui a un module (210) de phase formé de plusieurs sous-modules (610) bipolaires montés électriquement en série, qui ont chacun plusieurs interrupteurs (810) à semiconducteur et un accumulateur (1020) d'énergie pouvant être chargé unipolairement, dans lequel la tension (Uzk) de l'accumulateur d'énergie peut, par les interrupteurs (810) à semiconducteur comme tension (UDC) de sous-module, être appliquée et coupée entre les deux pôles (ACP1, ACP2) de sous-module,

dans lequel la somme des tensions (UDC) de sous-module appliquées forme respectivement la tension (21) d'alimentation ayant une fréquence fondamentale donnée à l'avance,
dans lequel, pour l'amortissement de proportions de fréquence plus hautes que la fréquence fondamentale de la tension (21) d'alimentation, il est prévu, pour chaque module (210) de phase, un filtre (F) de fréquence passif, dans lequel respectivement une partie des sous-modules ont des tensions (UDC) de sous-module appliquées et, une partie des sous-modules (610), des tensions (UDC) de sous-module coupées,
dans lequel le filtre (F) de fréquence a une fréquence (fr) de résonance qui est supérieure à une fréquence (ft) d'étalonnage donnée à l'avance,
dans lequel, par une régulation (15a) numérique, on détecte à chaque instant (tft) d'étalonnage successif, les écarts de la tension (21) d'alimentation à une tension de consigne donnée à l'avance et on applique au moins une tension (UDC) de sous-module coupée ou on coupe au moins l'une des tensions (UDC) de sous-module appliquée,
**caractérisé en ce qu'**
à l'intérieur d'un intervalle (Ti) d'échantillonnage de la régulation (15a) respectivement à une tension (UDC) de sous-module appliquée par la régulation (15a) pendant une première durée (T1, T2), qui est plus petite que l'intervalle (Ti) d'échantillonnage, au moins l'une des tensions (UDC) de sous-module coupée et appliquée au moins une fois et recoupée, grâce à quoi l'excitation du filtre de fréquence est diminuée.

## FIG 1

## FIG 2

# FIG 3

FIG 4

AC1

608

IP

610

610

610

UP

610

610

610

612

AC2

FIG 5

710          714          724    610

ACP1

UDC

ACP2

DC1    DC3

≈

=

DC2    DC4

$U_{zk}$

714

FIG 6

710

810

810

DC1

$U_{zk}$

ACP1

UDC

ACP2

810

810

DC2

FIG 7

710'

810

DC1

$U_{zk}$

ACP1

UDC

810

ACP2

DC2

## FIG 8

## FIG 9

## FIG 10

## FIG 11

## FIG 12

## FIG 13

## FIG 14

## FIG 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008086760 A

**In der Beschreibung aufgeführte Nicht-Patentliteratur**

- **QINGRUI TU et al.** *Impact of Sampling Frequency on Harmonic Distortion for Modular Multilevel Converter*